# EUROPEAN PATENT APPLICATION

(11) **EP 3 979 424 A1**
(43) Date of publication of application: **06.04.2022**
(21) Application number: 20306139.5
(22) Date of filing: 30.09.2020
(51) Int. Cl.: H01R 4/00, B33Y 80/00, H01R 43/00

(54) **CONDUCTOR JOINT AND METHOD FOR JOINING CONDUCTORS**

(71) Applicant: Nexans, 92400 Courbevoie (FR)
(72) Inventor: JOHANSON, Audun, 0653 OSLO (NO); SANGAR, Robin, 1445 DROBAK, OSLO (NO); JOHANSSON, Mats, 45290 STROMSTAD (SE); FRISK, Nils-Bertil, 45297 STROMSTAD (SE); JORGENSEN, Simon, 1655 SELLEBAKK, OSLO (NO)
(74) Representative: Ipsilon

(57) **Abstract**

The invention relates to a power cable with a joint electrical conductor comprising two conductor ends that are electrically and mechanically joined by a solid state additive manufactured element, and a method of manufacturing the joint conductor and the spliced power cable.

## Description

The present invention relates to joining of two power cables, more specific to use of solid state additive manufacturing to produce a solid state additive manufactured element joining together conductor strands of power cables.

### Background

Power cables for intermediate to high current capacities have typically one or more electric conductors at its core followed by electric insulation and shielding of the conductors, an inner sheathing protecting the core, armouring layer, and an outer sheathing. The conductors of power cables are typically made of either aluminium or copper. The conductor may either be a single strand surrounded by electric insulating and shielding layers, or a number of strands arranged into a bunt being surrounded by electric insulating and shielding layers.

These are the typical minimum of components required to make a functional power cable with comparable high electric power transferring capacity. However, a power cable may, also comprise one or more additional components depending on the intended properties and functionalities of the power cable.

It is, due to a number of reasons, sometimes necessary or economical to splice power cables. The splice should obtain at least similar mechanical and electrical properties as compared to the rest of the cable to avoid the splice to become a weak link in the power cable.

### Prior art

The first step in splicing of cables is to remove the shielding, insulation, armouring, outer sheath and all other layers present around the conductor(s) to lay bare a length of each conductor strand of both cables at the end of the cables which is to be spliced. Then the exposed conductor strands of the first cable are joined and electrically connected to corresponding conductor strands of the second cable. When all conductor strands are joined/connected, the cable splice is completed by reinstalling the insulation, shielding, armouring etc. over the exposed conductor strands.

EP 3 224 837 B1 discloses splicing conductors of high voltage cables by thermal joining such as welding. More precisely, a power cable comprising a conductive core comprising a conductor including a plurality of sections, and an electrical insulation system enclosing the conductor, and a sheath enclosing the conductive core, wherein one of the plurality of sections of the conductor is a first conductor section and another of the plurality of sections of the conductor is a second conductor section, which first conductor section has a first cross-sectional layout that provides a first ampacity for the first conductor section, and which second conductor section has a second cross-sectional layout that provides a second ampacity for the second conductor section, wherein the first ampacity is higher than the second ampacity, wherein the plurality of sections are thermally joined, and wherein the electrical insulation system extends continually from the first conductor section to the second conductor section of the conductor. A method of manufacturing a power cable is also presented.

US 2016/0164238 discloses a system and method for additively manufacturing splices and terminations for extra high, high, medium and low voltage power cable includes providing an additive manufacturing machine having at least one print head. Cable ends can be secured within a chamber from which atmospheric air can be evacuated and replaced with non-oxidizing gas. A scanning device can determine the composition and position of the various constituents of the cable ends, from which information a controller can determine the printing sequence and print a termination or splice portion.

Jørgen Blindheim et al. 2018 [Ref. 1], discloses a concept for a new additive manufacturing process for aluminium alloys, based on hybrid extrusion & bonding (HYB) technology. The process is capable of producing near net shape structures at high deposition rates, utilizing metallic bonding to consolidate the feedstock to the substrate in the solid-state. The aluminium feedstock wire is processed through a specially designed extruder, which serves the purpose of dispersing inherent oxides of both the feedstock and the substrate. At the same time, it provides sufficient pressure for metallic bonding to occur. The process has been tested on a concept level by successfully depositing a two-layered structure of commercial purity aluminium.

### Objective of the invention

The main objective of the invention is to provide a power cable with a joint electrical conductor.

A further objective of the invention is to provide a method of manufacturing the joint electrical conductor and a power cable including such a joint.

The aim is to provide a conductor joint with both electrical and mechanical beneficial properties.

### Description of the invention

Additive manufacturing builds metallic objects of near net-shape by depositing successive layers/strips of metal onto a workpiece which adheres to the workpiece by metallic bonds forming a monolithic object of metal. Additive manufacturing has the advantage of enabling relatively rapid material deposition rates and at the same time enabling building near net-shape objects of metal with relatively complex shapes, and is thus suited for building bridging portions in e.g. aluminium or copper mechanically and electrically linking together opposite arranged conductor strands by building a joint comprising a metallic member.

Thus, in a first aspect, the invention relates to power cable with a joint electrical conductor comprising two conductor ends that are electrically and mechanically joined, wherein the two conductor ends are electrically and mechanically joined by a solid state additive manufactured element.

The term "solid state additive manufacturing" as used herein encompasses any additive manufacturing technique able to build the joint linking two or more conductor strands and which does not involve heating the deposited material to form the joint to a liquid state. I.e., the additive manufacturing process takes place in the solid phase without the workpiece nor the deposited metal/material being molten during the additive manufacturing process. An advantage of building the joint by solid state additive manufacturing compared with liquid state additive manufacturing is that the material of the joint will not be subject solidification contraction building-up residual stresses in the deposited material and which may cause inadequate electrical contact between the joint and the conductors. Examples of techniques which may be applied in solid state additive manufacturing processes includes, but is not limited to, hybrid metal extrusion & bonding (HYB), friction enhanced deposition, and cold spray deposition.

As given in [Ref. 1], hybrid metal extrusion & bonding (HYB) is based on the principle of continuous extrusion, also known as conform extrusion. The deposited material obtains a metallic bonding to the substrate/workpiece by a combination of oxide dispersion, shear formation, surface expansion and pressure. The HYB-process gives a favourable temperature, which when extruding aluminium or an aluminium alloy is of 350 to 400 °C, which together with displacement of oxide on the base material surface being immediately sealed-off by the deposited material and the high pressure enables a strong metallic bonding between the deposited material and the base material. This makes HYB well suited and a preferred technique to join conductor strands of power cables, since the joints become metallic bonded to the conductor strands giving the jointed section mechanically and electric properties being similar to the mechanical and electric properties of the conductor strands. Furthermore, since HYB introduces little or no heat on the conductor material and thus cause little or no softening, the mechanical strength of the joint can be greatly increased compared to prior solutions and allows to build joint geometries with enhanced flexibility compared to traditional welding techniques. A cable joint using a technique to manufacture free cable layers or free cable wire segments can allow to greatly reduce the local strain upon a given global bending i.e. bending stresses is reduced.

In one example embodiment, the joint electrical conductor may further comprises a pre-fabricated joint member being electrically and mechanically connected to the conductor end of the first power cable, and wherein the solid state manufactured member is electrically and mechanically connected to the pre-fabricated joint member and the conductor end of the second power cable, wherein the pre-fabricated joint member being electrically and mechanically attached to the conductor end of a first power cable in any manner known to the skilled person such as e.g. thermal joining, welding, clamping, or by the present solid state additive manufacturing. In this way the solid state additive manufactured element is arranged between the joint member and the conductor end of the second power cable. This embodiment may be prepared by electrically and mechanically connecting together both conductor ends by manufacturing a solid state manufactured member connecting the pre-fabricated joint member and the conductor end of the second power cable. This example embodiment may be advantageous if there is a difference in the diameter of the conductors and/or if there is a difference in the material of the conductors, for instance if one of the first or second power cables has an aluminium conductor and the other power cable has a copper conductor. In the latter case, the prefabricated joint member may be a composite having one aluminium end and one copper end such that the copper conductor is connected to the copper end of the joint member and the aluminium conductor to the aluminium end of the joint member.

In a second aspect, the invention relates to a method for forming a joint between a conductor strand of a first power cable and a conductor strand of a second power cable, comprising the following process steps:
i) aligning the conductor strand of the first power cable relative to the conductor strand of the second power cable such that the ends the conductor strands are arranged opposite each other,
ii) forming the joint between the conductor strands by manufacturing an element establishing mechanical and electrical contact between the conductor strands, characterised in that the element is manufactured by solid state additive manufacturing.

The method according to the second aspect of the invention may further comprise a step iii) being executed after step ii), comprising:
iii) if the first and second power cables comprises a plurality of conductor strands, repeating steps i) and ii) until each conductor strand of the first power cable is electrically joined to a conductor strand of the second power cable.

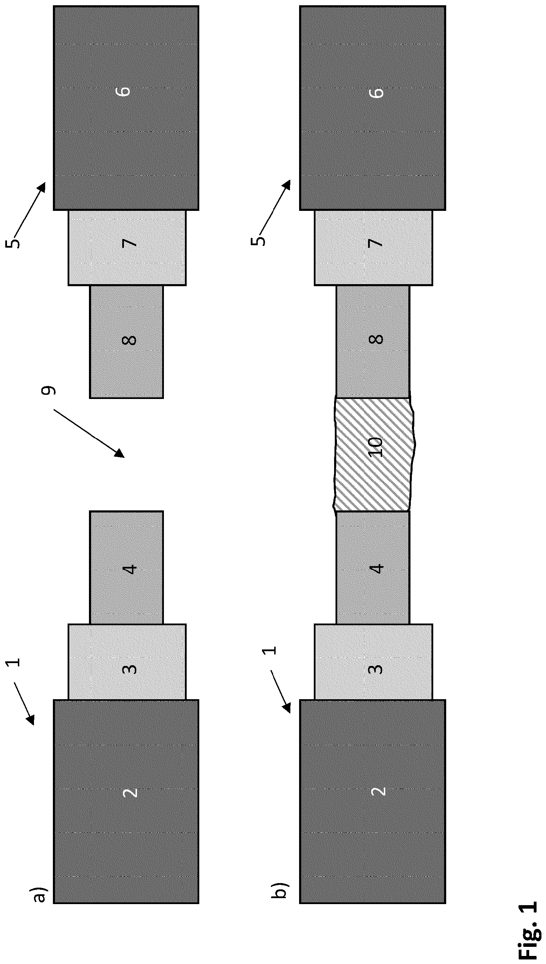

The joint according to the first and second aspect of the invention may in one alternative embodiment connect two conductor strands having a similar, or in another alternative a dissimilar, cross-sectional area. In the former case the solid state additive manufactured element of the joint may advantageously be made to have a net-shape near a solid cylinder having a similar diameter as the conductor strands it joins, such as shown in e.g. figure 1b). In the latter case, the solid state additive manufactured element may be tapered to have one end with the same diameter as one of the conductor strands and a similar diameter as the other conductor strand at the opposite end. The flexibility of additive manufacturing to produce objects of complex shapes enables to make solid state additive manufactured elements joining dissimilar number of conductor strands on its sides. I.e. the solid state additive manufactured element may in one example embodiment connect e.g. one conductor strand of a first power cable with two or more conductor strands of a second power cable.

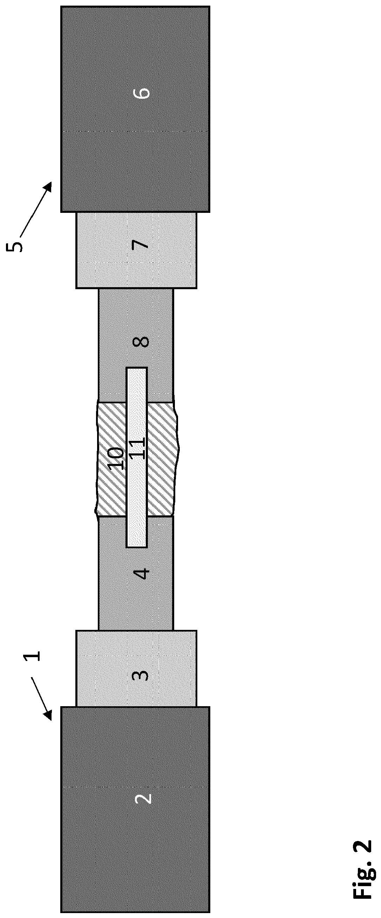

The additive manufacturing technique also enables applying a mechanical bolt or similar object to bridge the gap across the conductor strands to be joined and then complete the joint by depositing metal such as aluminium or copper onto the mechanical bolt to make a composite solid state additive manufactured element having similar cross sectional area as the joined conductors, such as shown in e.g. figure 2, which element electrically and mechanically connects the conductor strands.

Conductor strands of high-voltage power cables are typically made of aluminium or copper, or alloys of aluminium or copper. The present invention may be applied to join power cables where the conductor strands of both the first and second power cables are made of aluminium or an alloy thereof, or where the conductor strands of both the first and second power cables are made of copper or an alloy thereof, or where the conductor strands of the first power cable is made of aluminium or an alloy thereof and the conductor strands of the second power cables are made of copper or an alloy thereof.

In the case of forming a joint between two conductor strands of aluminium, a preferred material for building the solid state additive manufactured element is aluminium or an aluminium alloy, preferably one of a xxxx- series such as AA1070, AA1100, AA1450, AA1370, AA6082 or AA6101 according to "International Alloy Designations and Chemical Composition Limits for Wrought Aluminium and Wrought Aluminium Alloys" of The Aluminium Association, January 2015.

In the case of forming a joint between two conductor strands of copper, a preferred material for building the solid state additive manufactured element is copper or a copper alloy, preferably one of a UNS nr. C1xxxxx-, C2xxxxx-, C5xxxxx-, C6xxxxx- or C7xxxxx series copper alloys according to the UNS Standard Designations for Wrought and Cast Copper and Copper Alloys, such as e.g. Cu-ETP, Cu-OF, CuZn, CuSn, CuSi, CuSiMn, CuSiNi, CuNiMn, CuCrZr, or CuMiSiCr.

In the case of forming a joint between a conductor strand of aluminium and a conductor strand of copper, a preferred material for building the solid state additive manufactured element is one of copper, a copper alloy, aluminium or an aluminium alloy, as defined above. I.e., an aluminium alloy, preferably one of a xxxx- series such as AA1070, AA1100, AA1450, AA1370, AA6082 or AA6101 according to "International Alloy Designations and Chemical Composition Limits for Wrought Aluminium and Wrought Aluminium Alloys" of The Aluminium Association, January 2015 or a copper or a copper alloy, preferably one of a UNS nr. C1xxxxx-, C2xxxxx-, C5xxxxx-, C6xxxxx- or C7xxxxx series copper alloys according to the UNS Standard Designations for Wrought and Cast Copper and Copper Alloys, such as e.g. Cu- ETP, Cu-OF, CuZn, CuSn, CuSi, CuSiMn, CuSiNi, CuNiMn, CuCrZr, or CuMiSiCr.

In a third aspect, the invention relates to a method for forming a splice between a first and a second power cable, where the first and the second power cable comprise one or more conductor strands being encompassed by one or more protective and shielding layers, and wherein the method comprises the following process steps:
a) removing the one or more protective and shielding layers at one end of the first and at one end of the second power cable to expose the one or more conductor strands of the first and the second power cable,
b) aligning the exposed end section of the one or more conductor strands of the first power cable relative to the exposed end section of the one or more conductor strand of the second power cable to make the conductor strands arranged opposite each other,
c) joining the aligned opposite ends of the one or more conductor strands of the first power cable to the one or more conductor strands of the second power cable by manufacturing one or more solid state additive manufactured elements establishing mechanical and electrical contact between the one or more conductor strands being joined, and
d) completing the splice by re-establishing the one or more protective and shielding layers across the exposed and joined conductor strands.

In one embodiment of the third aspect the joining of the conductor strands is performed by the method according to the second aspect of the invention.

The term "splice" as used herein refers to the complete joining process and/or complete connection of two power cables including conductors, shielding, insulation, armouring, outer sheath and any other component present in the cables, while the term "joint" refers to the process and/or solid state additive manufactured element connecting one or more conductor strands of one power cable with one or more conductor strands of a second power cable.

### List of figures

Figure 1a) is a drawing illustrating schematically a first and a second power cable stripped and arranged to be ready for producing a conductor joint.
Figure 1b) is a drawing illustrating schematically the same cables as shown in figure 1a) including a solid state additive manufactured element.
Figure 2 is a drawing illustrating schematically a solid state additive manufactured element including a mechanically bridging bolt.

### Example embodiment of the invention

An example embodiment of the joint according to the invention is shown in figures 1a) and 1b). Figure 1a) show a first power cable (1) comprising an armouring and outer sheath (2) and an electrical shield and insulation (3) and a conductor strand (4), and similarly for a second power cable (5) comprising an armouring and outer sheath (6) and an electrical shield and insulation (7) and a conductor strand (8). Parts of the armouring and outer sheath (2, 6) and the electrical shield and insulation (3, 7) are removed at one end of the cables (1, 5) to expose an end section of the conductor strands (4, 8). The power cables (4, 8) are arranged to have the conductor strands (4, 8) aligned and opposite each other. In figure 1b), the space/gap (9) between the conductor strands (4, 8) is filled with a solid state additive manufactured element (10) made by the method according to the first aspect of the invention.

Figure 2 illustrates another example embodiment of the solid state additive manufactured element which includes a mechanical bolt (11) being attached to and bridging the conductor strands (4, 8) to provide increased mechanical strength to the connection. The remaining space in the gap between the conductor strands is then filled by depositing a material by the method according to the second aspect of the invention.

A person skilled in the art will appreciate that the figures illustrate example embodiments and that surfaces of the conductor strands to be joint may be cut or shaped in different ways to support the joining by solid state additive manufacturing. Examples of such shapes include but are not limited to V-shaped cuts, stair stepped cuts or triangular cuts.

### References

1. Jørgen Blindheim et al., «Hybrid Metal Extrusion & Bonding (HYB) - a new technology for solid-state additive manufacturing», Procedia Manufacturing 26 (2018) 782-789.

## Claims

1. A power cable with a joint electrical conductor comprising two conductor ends that are electrically and mechanically joined,
**characterised in that**
the two conductor ends are electrically and mechanically joined by a solid state additive manufactured element.

2. The power cable according to claim 1, wherein the solid state additive manufactured element is an element manufactured by one of hybrid metal extrusion & bonding (HYB), friction enhanced deposition, or cold spray deposition, preferably hybrid metal extrusion & bonding (HYB).

3. The power cable according to claim 1 or 2, wherein the solid state additive manufactured element is made of
either:
aluminium or an aluminium alloy, preferably one of a xxxx- series such as AA1070, AA1100, AA1450, AA1370, AA6082 or AA6101 according to "International Alloy Designations and Chemical Composition Limits for Wrought Aluminium and Wrought Aluminium Alloys" of The Aluminium Association, January 2015,
or:
copper or a copper alloy, preferably one of a UNS nr. C1xxxxx-, C2xxxxx-, C5xxxxx-, C6xxxxx- or C7xxxxx series copper alloys such as Cu- ETP, Cu-OF, CuZn, CuSn, CuSi, CuSiMn, CuSiNi, CuNiMn, CuCrZr, and CuMiSiCr according to the UNS Standard Designations for Wrought and Cast Copper and Copper Alloys.

4. The power cable according to any preceding claim, wherein the solid state additive manufactured element further comprises a metallic bolt having a first end opposite a second end, and where the first end is mechanically attached to one of the two conductor ends and the second end is mechanically attached to the other of the two conductor ends, respectively.

5. The power cable according to any of claims 1 - 3, wherein the joint further comprises a pre-fabricated joint member being electrically and mechanically connected to the conductor end of the first power cable, and wherein the solid state manufactured member is electrically and mechanically connected to the pre-fabricated joint member and the conductor end of the second power cable.

6. A method for forming a joint between a conductor strand of a first power cable and a conductor strand of a second power cable, comprising the following process steps:
i) aligning the conductor strand of the first power cable relative to the conductor strand of the second power cable such that the ends the conductor strands are arranged opposite each other,
ii) forming the joint between the conductor strands by manufacturing an element establishing mechanical and electrical contact between the conductor strands, **characterised in that**
the element is manufactured by solid state additive manufacturing.

7. The method according to claim 6, wherein the solid state additive manufacturing is one of hybrid metal extrusion & bonding (HYB), friction enhanced deposition, or cold spray deposition, preferably hybrid metal extrusion & bonding (HYB).

8. The method according to claim 6 or 7, wherein
the conductor strand of both the first and second power cables are made of aluminium or an alloy thereof,
the conductor strand of both the first and second power cables are made of copper or an alloy thereof, or
the conductor strand of the first power cable is made of aluminium or an alloy thereof and the conductor strand of the second power cables are made of copper or an alloy thereof.

9. The method according to claim 8, wherein
the one or more conductor strands of the first and the second power cable are made of aluminium, and where
the joint is made of aluminium or an aluminium alloy, preferably one of a xxxx- series such as AA1070, AA1100, AA1450, AA1370, AA6082 or AA6101 according to "International Alloy Designations and Chemical Composition Limits for Wrought Aluminium and Wrought Aluminium Alloys" of The Aluminium Association, January 2015.

10. The method according to claim 8, wherein
the one or more conductor strands of the first and the second power cable are made of copper, and where
the joint is made of copper or a copper alloy, preferably one of a UNS nr. C1xxxxx-, C2xxxxx-, C5xxxxx-, C6xxxxx- or C7xxxxx series copper alloys such as Cu- ETP, Cu-OF, CuZn, CuSn, CuSi, CuSiMn, CuSiNi, CuNiMn, CuCrZr, and CuMiSiCr according to the UNS Standard Designations for Wrought and Cast Copper and Copper Alloys.

11. The method according to claim 8, wherein
the one or more conductor strands of the first power cable are made of aluminium and the one or more conductor strands of the first power cable are made of copper, and where the solid state additive manufactured element is made of aluminium or an aluminium alloy, preferably one of a xxxx-series such as AA1070, AA1100, AA1450, AA1370, AA6082 or AA6101 according to "International Alloy Designations and Chemical Composition Limits for Wrought Aluminium and Wrought Aluminium Alloys" of The Aluminium Association, January 2015, or of copper or a copper alloy, preferably one of a UNS nr. C1xxxxx-, C2xxxxx-, C5xxxxx-, C6xxxxx- or C7xxxxx series copper alloys such as Cu- ETP, Cu-OF, CuZn, CuSn, CuSi, CuSiMn, CuSiNi, CuNiMn, CuCrZr, and CuMiSiCr according to the UNS Standard Designations for Wrought and Cast Copper and Copper Alloys.

12. A method for forming a splice between a first and a second power cable, where the first and the second power cable comprise one or more conductor strands being encompassed by one or more protective and shielding layers, and wherein the method comprises the following process steps:
a) removing the one or more protective and shielding layers at one end of the first and at one end of the second power cable to expose the one or more conductor strands of the first and the second power cable,
b) aligning the exposed end section of the one or more conductor strands of the first power cable relative to the exposed end section of the one or more conductor strand of the second power cable to make the conductor strands arranged opposite each other,
c) joining the aligned opposite ends of the one or more conductor strands of the first power cable to the one or more conductor strands of the second power cable by manufacturing one or more solid state additive manufactured elements establishing mechanical and electrical contact between the one or more conductor strands being joined, and
d) completing the splice by re-establishing the one or more protective and shielding layers across the exposed and joined conductors strands.

13. Method according to claim 12, wherein the joining of the conductor strands is performed by the method according to any of claims 7 to 11.

14. A joint between a conductor strand of a first power cable and a conductor strand of a second power cable,
**characterised in that**
the joint is made by the method according to any of claims 6 to 11.

15. A splice between a first power cable and a second power cable,
**characterised in that**
the splice is made by the method according to claim 12 or 13.
